# EUROPEAN PATENT SPECIFICATION

(11) **EP 3 797 913 B1**
(45) Date of publication and mention of the grant of the patent: **31.01.2024**
(21) Application number: 19825575.4
(22) Date of filing: 31.05.2019
(51) Int. Cl.: B23K 9/02, B23K 9/025, B23K 26/348, B23K 26/244, B23K 26/242, B62D 25/04, B62D 27/02

(54) **JOINING STRUCTURE AND METHOD FOR MANUFACTURING THE SAME**
VERBINDUNGSSTRUKTUR UND VERFAHREN ZUR HERSTELLUNG DERSELBEN
STRUCTURE DE JONCTION ET SON PROCÉDÉ DE FABRICATION

(30) Priority: 29.06.2018 JP 2018124515
(43) Date of publication of application: 31.03.2021
(73) Proprietor: KABUSHIKI KAISHA KOBE SEIKO SHO (KOBE STEEL, LTD.), Hyogo 651-8585 (JP)
(72) Inventor: CHEN, Liang, Kanagawa 251-8551 (JP); WATANABE, Kenichi, Hyogo 651-2271 (JP); YASUI, Kazuya, Hyogo 651-2271 (JP); SHI, Dongyong, Hyogo 651-2271 (JP); HADANO, Masao, Kanagawa 251-8551 (JP); KIMURA, Takayuki, Hyogo 651-2271 (JP); SUZUKI, Reiichi, Kanagawa 251-8551 (JP)
(74) Representative: Müller-Boré & Partner Patentanwälte PartG mbB
(86) International application number: PCT/JP2019/021881
(87) International publication number: WO 2020/003900

(56) References cited:
- WO-A1-2017/131186
- JP-A- 2000 197 969
- JP-A- 2002 160 020
- JP-A- 2002 160 020
- JP-A- 2013 220 445
- JP-A- 2013 220 445
- JP-A- 2017 189 781
- JP-A- 2017 189 781

## Description

### TECHNICAL FIELD

The present invention relates to a joint structure and a method for manufacturing the same, more specifically relates to a joint structure suitable for, for example, a structural member for an automobile and a method for manufacturing the same.

### BACKGROUND ART

In recent years, in order to enhance collision safety while reducing weight of a vehicle body with reducing a CO₂ emission amount as an object, a method of using a high tensile steel plate or partially reinforcing a necessary place with a reinforcing material is known. Patent Literatures 1 and 2 disclose a joint body manufactured by joining two metal members, that is, a first metal member and a second metal member by laser welding. Patent Literature 1 discloses that a welding mark of the laser welding is a pair or plural pairs of straight lines parallel to each other. Patent Literature 2 discloses that a welding mark of the laser welding has a plurality of C-shaped portions arranged continuously, and parts of the adjacent C-shaped portions overlap.

Patent Literature 3 relates to the blank (tailored blank) technique for the integration shaping molding mainly utilized for the pressed part manufacture the body of a motor vehicle, and for chassiss. Metal plates are placed one above the other and joining of the profile line of the overlapping plates is carried out with welding.

Patent Literature 4 relates to joint metal strips for press forming chassis component of vehicle, having pile of two metal strips unwound from respective coils, having overlap and non-overlap portions. The steel strip for tailored blank are produced by continuous laser or seam welder.

### CITATION LIST

### PATENT LITERATURE

Patent Literature 1: JP-A-2001-507993
Patent Literature 2: JP-A-2014-15206
Patent Literature 3: JP2000197969 A
Patent Literature 4:JP2002160020 A

### SUMMARY OF INVENTION

### TECHNICAL PROBLEM

In the joint bodies disclosed in Patent Literature 1 or 2, there is still room for improvement in joining strength between the first metal member and the second metal member. Patent Literature 3 is considered as being the closest prior art to the invention.

Therefore, the joint bodies are not suitable for processing by, for example, hot stamping (hot press). That is, when these joint bodies are processed by hot stamping, due to insufficient joining strength, particularly insufficient joining strength of a joint portion between the first metal member and an edge portion of the second metal member, the first metal member and the second metal member may be partially or entirely peeled off from the edge portion.

Further, when an external force is applied to the hot stamping component at the time of a collision accident, the first metal member and the second metal member can be peeled off, so that a sufficient reinforcing effect cannot be obtained. Further, since laser processing equipment is expensive, it is a factor that increases product cost.

The present invention has been made in view of the problems described above, and an object thereof is to provide a joint structure that has high joining strength and can be manufactured at low cost, and a method for manufacturing the same.

### SOLUTION TO PROBLEM

The present invention is set out in the independent claims 1 and 4 and further embodiments of the invention are set out in the dependent claims.

### ADVANTAGEOUS EFFECTS OF INVENTION

According to the joint structure and the method for manufacturing the same of the present invention, the joint structure has high joining strength, and the joint structure can be manufactured at low cost.

### BRIEF DESCRIPTION OF DRAWINGS

[FIG. 1] FIG. 1 is a perspective view of a joint structure according to an embodiment of the present invention.
[FIG. 2A] FIG. 2A is a perspective view of a modification of the joint structure according to the embodiment of the present invention.
[FIG. 2B] FIG. 2B is a cross-sectional view taken along a line A-A of FIG. 2A.
[FIG. 3] FIG. 3 is a perspective view of the joint structure bent along a line B-B of FIG. 2A.
[FIG. 4] FIG. 4 is a cross-sectional view of another modification of the joint structure according to the embodiment of the present invention.
[FIG. 5] FIG. 5 is a perspective view showing an example of a B pillar manufactured by hot-stamping the joint structure according to the embodiment of the present invention.
[FIG. 6] FIG. 6 is a perspective view showing another example of a B pillar manufactured by hot stamping the joint structure according to the embodiment of the present invention.

### DESCRIPTION OF EMBODIMENTS

Embodiments of a joint structure according to the present invention is described in detail based on the drawings.

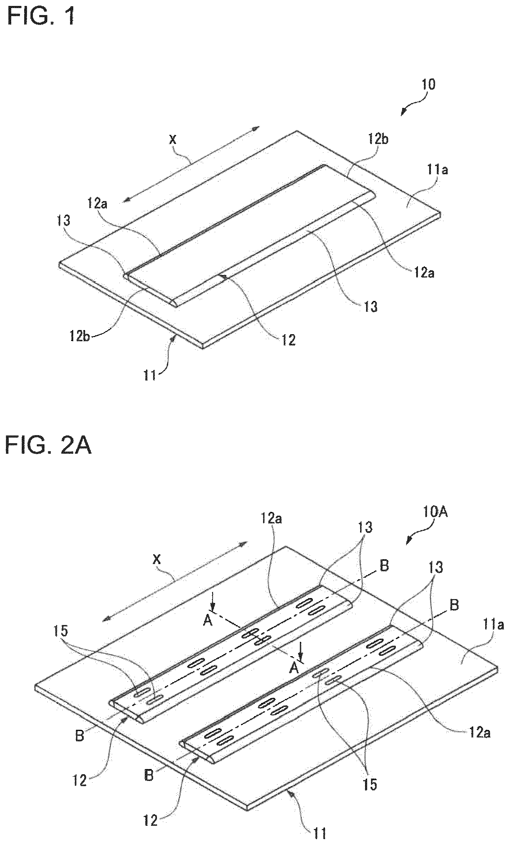

FIG. 1 is a perspective view of a joint structure manufactured by a method for manufacturing the joint structure according to the present embodiment. As shown in FIG. 1, the joint structure 10 includes a first plate-shaped member 11 made of steel and a second plate-shaped member 12 made of steel as a reinforcing material, which is formed into a long shape narrower than the first plate-shaped member 11.

The second plate-shaped member 12 is overlapped on a surface 11a of the first plate-shaped member 11. Both edge portions 12a along a longitudinal direction (X direction in the drawing) of the second plate-shaped member 12 and the surface 11a of the first plate-shaped member 11 are joined by a weld metal (bead) 13 formed by an arc welding or a laser-arc hybrid welding. The weld metal (bead) 13 may be formed continuously along both the edge portions 12a or may be formed intermittently. However, as described later, in the case where bending is performed along an imaginary line B (see FIG. 2A) set on an overlapping surface 14, the weld metal (bead) 13 is preferably formed continuously in order to correspond to a stress generated at the time of bending.

A material of the first plate-shaped member 11 and the second plate-shaped member 12, which are made of steel, is not particularly limited as long as it is pure iron and iron alloy, and examples thereof include mild steel, carbon steel, and stainless steel.

The first plate-shaped member 11 and the second plate-shaped member 12 can also be subjected to surface treatment for forming a coating such as an electrically low element or work piece, an insulating substance, and a passivation film in order to preventing rust, and the like. Examples thereof include zinc plating, chromium plating, nickel plating, aluminum plating, tin plating, resin coating, and ceramic coating.

Both the edge portions 12a of the second plate-shaped member 12 and the surface 11a of the first plate-shaped member 11 are joined with a filler metal (welding wire) by an arc welding or a laser-arc hybrid welding. Therefore, both the edge portions 12a of the second plate-shaped member 12 can be joined in a wide area, and joining strength is improved as compared with joining by a spot welding, a laser welding, or the like. Further, by appropriately selecting components of the filler metal, it is possible to design joining strength at a joint portion. As for a material of the filler metal, a welding wire or a welding rod which is generally used is applicable as long as the weld metal 13 is a Fe-based alloy.
In the laser-arc hybrid welding, a laser is added as a heat source in an arc welding method as a heat source and wire supply method. The method is advantageous in that the welding speed is higher than that of an ordinary arc welding method.

In the embodiment shown in FIG. 1, both the edge portions 12a along the longitudinal direction of the second plate-shaped member 12 are welded to the first plate-shaped member 11 by arc welding or laser-arc hybrid welding, but edge portions 12b extending in a direction (short direction) which intersect the both edge portions 12a of the second plate-shaped member 12 may also be welded to the first plate-shaped member 11 by an arc welding or a laser-arc hybrid welding. In this way, by welding the second plate-shaped member 12 to the first plate-shaped member 11 over an entire periphery of the edge portions 12a and 12b, water or the like penetrating into a gap between the first plate-shaped member 11 and the second plate-shaped member 12 can be prevented, and corrosion resistance is significantly improved.

The first plate-shaped member 11 and the second plate-shaped member 12 welded by an arc welding or a laser-arc hybrid welding may be bent to form a formed article. Depending on a degree of bending or strength required for the joint structure 10, in the case where only both edge portions 12a of the second plate-shaped member 12 are welded by an arc welding or a laser-arc hybrid welding, the joint structure 10 may have insufficient joining strength or bending strength. In particular, when a width of the second plate-shaped member 12 is wide and a distance between the two edge portions 12a is large, strength may be insufficient.

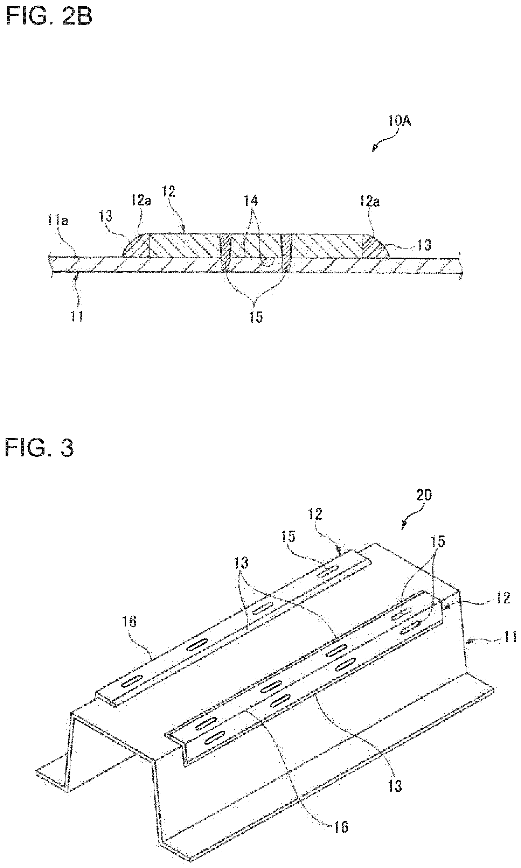

FIG. 2A is a perspective view of a joint structure 10A according to a modification in which the front surface 11a of the first plate-shaped member 11 and the both edge portions 12a of the second plate-shaped member 12 are joined by an arc welding or a laser-arc hybrid welding, and the overlapping surfaces 14 of the first plate-shaped member 11 and the second plate-shaped member 12 are further joined by a laser welding. FIG. 2B is a cross-sectional view taken along a line A-A of FIG. 2A.

In the joint structure 10A according to the modification, as shown in FIG. 2A and FIG. 2B, the overlapping surfaces 14 of the first plate-shaped member 11 and the second plate-shaped member 12, in which both the edge portions 12a are joined to the first plate-shaped member 11 by an arc welding or a laser-arc hybrid welding, are joined by a laser welding by plural pairs of joint portions 15 arranged along the longitudinal direction (X direction in FIG. 2A) of the second plate-shaped member 12 and formed to face to each other in a width direction of the second plate-shaped member 12. This further improves the joining strength between the first plate-shaped member 11 and the second plate-shaped member 12.

The joint structure 10A thus formed is bent along an imaginary line B (see FIG. 2A) set on the overlapping surface 14, and is processed into a formed article 20 shown in FIG. 3 by forming a bent portion 16.

The bent portion 16 (imaginary line B) is preferably set so as to pass substantially the center of a pair of the joint portions 15 formed to face to each other in the width direction of the second plate-shaped member 12. Accordingly, a force acting at the time of bending acts equally on the left and right to improve shape accuracy of the formed article 20.

Accompanied with bending, a shearing force acts on the joint portion between the first plate-shaped member 11 and the second plate-shaped member 12. In the case where the first plate-shaped member 11 and the second plate-shaped member 12 are joined only by a spot welding or a laser welding, the joining strength of the edge portions 12a of the second plate-shaped member 12 with the first plate-shaped member 11 may be weak, and the second plate-shaped member 12 may be peeled off from the edge portions 12a.

However, in the joint structure 10A of the embodiment, the first plate-shaped member 11 and both the edge portions 12a of the second plate-shaped member 12 are joined by an arc welding or a laser-arc hybrid welding, and the overlapping surfaces 14 of the first plate-shaped member 11 and the second plate-shaped member 12 are joined in a plurality of portions by a laser welding. Therefore, the joining strength is high, and the first plate-shaped member 11 and the second plate-shaped member 12 are prevented from being peeled off by bending.

In the case where the joint structures 10 and 10A are structural members for an automobile requiring high strength such as pillars, it is preferable to use a steel material for hot stamping as the first plate-shaped member 11 and the second plate-shaped member 12. In the case where the joint structures 10 and 10A are made of the steel material for hot stamping, bending is performed by hot stamping (hot working) that is processed in a state of heating to a temperature of 800°C or higher. Accordingly, accurate forming is possible.

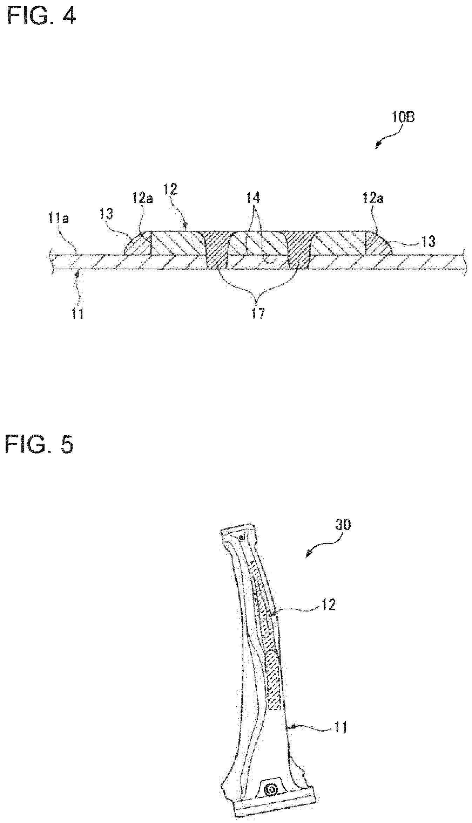

FIG. 4 is a cross-sectional view of a joint structure according to another modification in which the overlapping surfaces 14 of the first plate-shaped member 11 and the second plate-shaped member 12, in which the edge portions 12a are joined by an arc welding or a laser-arc hybrid welding, are joined by a plasma welding, a TIG welding, or a laser-TIG hybrid welding.

In a joint structure 10B of the modification, the first plate-shaped member 11 and both the edge portions 12a of the second plate-shaped member 12 are joined with the weld metal 13 formed by an arc welding or a laser-arc hybrid welding, and the overlapping surfaces 14 of the first plate-shaped member 11 and the second plate-shaped member 12 are further joined firmly in a plurality of portions by joint portions 17 formed by a plasma welding, a TIG welding, or a laser-TIG hybrid welding.

In this way, in the first plate-shaped member 11 and the second plate-shaped member 12, both the edge portions 12a are joined to the first plate-shaped member 11 by an arc welding or a laser-arc hybrid welding, and the overlapping surfaces 14 of the first plate-shaped member 11 and the second plate-shaped member 12 are further joined firmly in a plurality of portions by any welding of a laser welding, a plasma welding, a TIG welding, and laser-TIG hybrid welding, so that the first plate-shaped member 11 and the second plate-shaped member 12 can be formed by hot stamping and are suitably used as the structural member for an automobile.

In the laser-TIG hybrid welding, a laser is added as a heat source in a TIG welding method as a heat source and wire supply method. The method is advantageous in that penetration (penetrability of two plates) is deeper and the welding speed is higher than those of an ordinary arc welding method.

For example, FIG. 5 shows an example of a B pillar 30 (an example of the structural member for an automobile) manufactured by processing the joint structures 10, 10A, and 10B with hot stamping. The B pillar 30 is formed by joining one second plate-shaped member 12 by welding to a part of the first plate-shaped member 11 required for reinforcement and then integrally forming them by hot stamping.

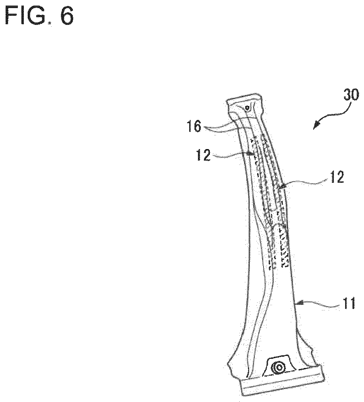

The B pillar 30 shown in FIG. 6 is formed by joining two second plate-shaped members 12 to the first plate-shaped member 11 at positions which are ridge line portions of the B pillar 30, respectively, and bending the first plate-shaped member 11 and the second plate-shaped members 12 by hot stamping on the overlapping surface 14 between the first plate-shaped member 11 and the second plate-shaped member 12.

Examples of the structural member for an automobile to which the joint structures 10, 10A, and 10B can be applied include a side sill, a floor cross member, a roof side rail, and a center tunnel cover other than the B pillar 30.

Although the embodiments are described above with reference to the drawings, it is needless to say that the present invention is not limited to such examples. It will be apparent to those skilled in the art that various changes and modifications may be conceived within the scope of the claims. It is also understood that various changes and modifications belong to the technical scope of the present invention.

### REFERENCE SIGNS LIST

- 10, 10A, 10B: joint structure
- 11: first plate-shaped member (steel material for hot stamping)
- 11a: surface
- 12: second plate-shaped member (steel material for hot stamping)
- 12a, 12b: edge portion
- 13: weld metal (bead)
- 14: overlapping surface
- 15: joint portion
- 16: bent portion
- 17: joint portion
- 20: formed article (structural member for automobile)
- 30: B pillar

## Claims

1. A joint structure (10) formed by joining a first plate-shaped member made of steel (11) and a second plate-shaped member made of steel (12) that is overlapped on the first plate-shaped member (11) and that is formed in a long shape,
wherein a surface of the first plate-shaped member (11) and both edge portions (12a, 12b) of the second plate-shaped member (12) along a longitudinal direction are joined by a weld metal (13),
wherein the first plate-shaped member (11) and the second plate-shaped member (12) are further joined to each other in an overlapping surface (14) between the first plate-shaped member (11) and the second plate-shaped member (12), and
wherein the joint structure (10) is further formed through bending by hot stamping that is processed in a state of heating to a temperature of 800°C or higher.

2. The joint structure (10) according to claim 1, wherein a bent portion (16) is formed on an overlapping surface (14) between the first plate-shaped member (11) and the second plate-shaped member (12).

3. The joint structure (10) according to claim 1 or 2, which is a structural member for an automobile.

4. A method for manufacturing a joint structure (10) formed by joining a first plate-shaped member made of steel (11) and a second plate-shaped member made of steel (12) that is overlapped on the first plate-shaped member (11) and that is formed in a long shape, the method comprising:
a step of overlapping the first plate-shaped member (11) and the second plate-shaped member (12); and
a welding step of joining each of both edge portions (12a, 12b) of the second plate-shaped member (12) along a longitudinal direction to the first plate-shaped member (11) by an arc welding or a laser-arc hybrid welding,
further comprising joining the first plate-shaped member (11) and the second plate-shaped member (12) to each other in the overlapping surface (14) between the first plate-shaped member (11) and the second plate-shaped member (12) by any welding of a laser welding, a plasma welding, a TIG welding, or a laser-TIG hybrid welding; and
a step of bending by hot stamping that is processed in a state of heating to a temperature of 800°C or higher.

5. The method for manufacturing a joint structure (10) according to claim 4, wherein a bending is performed on an overlapping surface (14) between the first plate-shaped member (11) and the second plate-shaped member (12).

6. The method for manufacturing a joint structure (10) according to claim 4 or 5, wherein the joint structure (10) is a structural member for an automobile.

## Patentansprüche

1. Verbindungsstruktur (10), die durch Verbinden eines ersten plattenförmigen Elements aus Stahl (11) und eines zweiten plattenförmigen Elements aus Stahl (12) gebildet wird, das auf dem ersten plattenförmigen Element (11) überlappt und in einer langen Form ausgebildet ist,
wobei eine Oberfläche des ersten plattenförmigen Elements (11) und beide Kantenabschnitte (12a, 12b) des zweiten plattenförmigen Elements (12) entlang einer Längsrichtung durch ein Schweißmetall (13) verbunden sind,
wobei das erste plattenförmige Element (11) und das zweite plattenförmige Element (12) ferner in einer überlappenden Oberfläche (14) zwischen dem ersten plattenförmigen Element (11) und dem zweiten plattenförmigen Element (12) miteinander verbunden sind, und
wobei die Verbindungsstruktur (10) ferner durch Biegen mittels Heißprägen gebildet wird, das in einem Zustand der Erwärmung auf eine Temperatur von 800°C oder höher durchgeführt wird.

2. Verbindungsstruktur (10) nach Anspruch 1, wobei ein gebogener Abschnitt (16) an einer überlappenden Oberfläche (14) zwischen dem ersten plattenförmigen Element (11) und dem zweiten plattenförmigen Element (12) ausgebildet ist.

3. Verbindungsstruktur (10) nach Anspruch 1 oder 2, die ein Bauteil für ein Kraftfahrzeug ist.

4. Verfahren zur Herstellung einer Verbindungsstruktur (10), die durch Verbinden eines ersten plattenförmigen Elements aus Stahl (11) und eines zweiten plattenförmigen Elements aus Stahl (12) gebildet wird, das auf dem ersten plattenförmigen Element (11) überlappt und in einer langen Form ausgebildet ist, wobei das Verfahren umfasst:
einen Schritt des Überlappens des ersten plattenförmigen Elements (11) und des zweiten plattenförmigen Elements (12); und
einen Schweißschritt des Verbindens jedes der beiden Kantenabschnitte (12a, 12b) des zweiten plattenförmigen Elements (12) entlang einer Längsrichtung mit dem ersten plattenförmigen Element (11) durch ein Lichtbogenschweißen oder ein Laser-Lichtbogen-Hybridschweißen,
ferner umfassend das Verbinden des ersten plattenförmigen Elements (11) und des zweiten plattenförmigen Elements (12) miteinander in der überlappenden Oberfläche (14) zwischen dem ersten plattenförmigen Element (11) und dem zweiten plattenförmigen Element (12) durch ein beliebiges Schweißen von einem Laserschweißen, einem Plasmaschweißen, einem WIG-Schweißen oder einem Laser-WIG-Hybridschweißen; und
einen Schritt des Biegens mittels Heißprägen, der in einem Zustand der Erwärmung auf eine Temperatur von 800°C oder höher durchgeführt wird.

5. Verfahren zur Herstellung einer Verbindungsstruktur (10) nach Anspruch 4, wobei ein Biegen an einer Überlappungsfläche (14) zwischen dem ersten plattenförmigen Element (11) und dem zweiten plattenförmigen Element (12) durchgeführt wird.

6. Verfahren zur Herstellung einer Verbindungsstruktur (10) nach Anspruch 4 oder 5, wobei die Verbindungsstruktur (10) ein Strukturbauteil für ein Kraftfahrzeug ist.

## Revendications

1. Structure de raccord (10) formée en raccordant un premier élément en forme de plaque réalisé en acier (11) et un second élément en forme de plaque réalisé en acier (12) qui est chevauché sur le premier élément en forme de plaque (11) et qui est formé en une forme longue,
dans laquelle une surface du premier élément en forme de plaque (11) et les deux portions de bord (12a, 12b) du second élément en forme de plaque (12) le long d'une direction longitudinale sont raccordées par un métal soudé (13),
dans laquelle le premier élément en forme de plaque (11) et le second élément en forme de plaque (12) sont en outre raccordés l'un à l'autre dans une surface chevauchante (14) entre le premier élément en forme de plaque (11) et le second élément en forme de plaque (12), et
dans laquelle la structure de raccord (10) est en outre formée en pliant par marquage à chaud qui est traité dans un état de chauffage à une température de 800 °C ou supérieure.

2. Structure de raccord (10) selon la revendication 1, dans laquelle une portion pliée (16) est formée sur une surface chevauchante (14) entre le premier élément en forme de plaque (11) et le second élément en forme de plaque (12).

3. Structure de raccord (10) selon la revendication 1 ou 2, qui est un élément structurel pour une automobile.

4. Procédé de fabrication d'une structure de raccord (10) formée en raccordant un premier élément en forme de plaque réalisé en acier (11) et un second élément en forme de plaque réalisé en acier (12) qui est chevauché sur le premier élément en forme de plaque (11) et qui est formé en une forme longue, le procédé comprenant :
une étape de chevauchement du premier élément en forme de plaque (11) et du second élément en forme de plaque (12) ; et
une étape de soudage consistant à raccorder chacune des deux portions de bord (12a, 12b) du second élément en forme de plaque (12) le long d'une direction longitudinale au premier élément en forme de plaque (11) par un soudage à l'arc ou un soudage hybride au laser-à l'arc,
comprenant en outre raccorder le premier élément en forme de plaque (11) et le second élément en forme de plaque (12) l'un à l'autre dans la surface chevauchante (14) entre le premier élément en forme de plaque (11) et le second élément en forme de plaque (12) par tout soudage parmi un soudage au laser, un soudage au plasma, un soudage TIG ou un soudage hybride au laser-TIG ; et
une étape de pliage par marquage à chaud qui est traité dans un état de chauffage à une température de 800 °C ou supérieure.

5. Procédé de fabrication d'une structure de raccord (10) selon la revendication 4, dans lequel un pliage est réalisé sur une surface chevauchante (14) entre le premier élément en forme de plaque (11) et le second élément en forme de plaque (12).

6. Procédé de fabrication d'une structure de raccord (10) selon la revendication 4 ou 5, dans lequel la structure de raccord (10) est un élément structurel pour une automobile.
